(19) Europäisches Patentamt

European Patent Office

Office européen des brevets

(11) EP 1 065 845 A2

## (12) EUROPEAN PATENT APPLICATION

(43) Date of publication:
03.01.2001 Bulletin 2001/01

(51) Int Cl.7: H04L 12/56, H04Q 11/04

(21) Application number: 99122871.9

(22) Date of filing: 17.11.1999

(84) Designated Contracting States:
AT BE CH CY DE DK ES FI FR GB GR IE IT LI LU
MC NL PT SE
Designated Extension States:
AL LT LV MK RO SI

(30) Priority: 30.06.1999 US 342976

(71) Applicant: NEC CORPORATION
Tokyo (JP)

(72) Inventors:
• Goudreau, Mark, c/o NEC U.S.A., Inc.
Princeton, New Jersey 08540 (US)

• Kolliopoulos, Stavros,
c/o NEC Research Inst.,Inc.
Princeton, New Jersey 08540 (US)
• Rao, Satishi, c/o NEC Research Inst.,Inc.
Princeton, New Jersey 08540 (US)

(74) Representative:
Baronetzky, Klaus, Dipl.-Ing. et al
Splanemann Reitzner
Baronetzky Westendorp
Patentanwälte
Rumfordstrasse 7
80469 München (DE)

(54) Shooting blanks method for high throughput in input-queued switches

(57) A method of routing in a switch comprising ports, said ports being one of M input ports and N output ports having cells to route between said M input ports and N output ports, said cells arriving at a different rate for a subset of ports, each of said M input port having N queues thereby having M x N queues, said method comprising: identifying a port with a highest arrival rate of cells, wherein an arrival rate for one of said M input ports is a sum of an arrival rate for each N queue associated with said one of M input ports and an arrival rate for one of said N output ports is a sum of arrival rates from each of said M input ports to said one of N output ports; adding dummy cells to all input ports and output ports other than said input port or output port with a highest arrival rate, such that the arrival rates for all the input ports and output ports are substantially the same; and using a scheduling method that does not consider queue lengths.

FIG. 6

SHOOTING BLANKS SWITCH

RATE IDENTIFIER ~6.3

FILL-UP DETERMINER ~6.4

DUMMY CELL GENERATOR ~6.5

SCHEDULER ~6.6

EP 1 065 845 A2

**Description**

The present invention is related to a scheduling method for a queuing system with multiple queues requiring multiple services. Specifically, the present invention is related to shooting blanks method for a high throughput in input-queued switches. This invention is embodied in a computer-implemented scheduling method; in methods for use in routing: in a shooting blanks switch and in a network system using shooting blanks switches.
Several applications require the allotment of multiple queues requesting multiple services. This application relates to an improved scheduling technique for such a queuing system.

IB.1 Graph Theory Terminology

For a better understanding of the present invention some graph-theoretic terminology is defined herein.

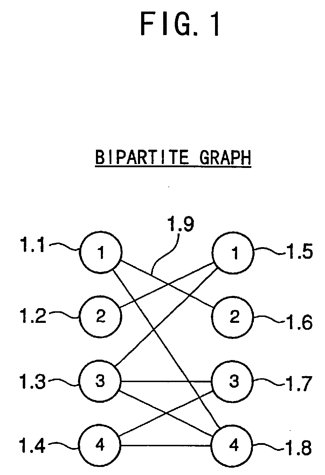

- A *bipartite graph,* as shown in FIG. 1, is an undirected graph for which the vertices can be partitioned into two sets 1.1-1.4 and 1.5-1.8 and an edge 1.9 is located only between the two sets. A set of queues requiring a set of services can be represented by such a bipartite graph. An edge represents a queue between the first vertex and the second vertex. The existence of an edge between two vertices indicates that a corresponding queue requires a service represented by the second vertex.
- A bipartite *matching* is a subset of edges such that no vertex is incident to more than one of the edges in the subset. Finding a matching corresponds to the selection of a permutation between queues and services requested.
- A *maximum* (size) *matching* is a matching with the largest possible number of edges. $n$ and $m$ denote the number of vertices and edges respectively in an underlying graph representing the present state. For an $N$ x $N$ system representing $N^2$ queues requiring N services $n = 2N$ and $m <= N^2$.
- A *maximum weight matching* is a matching that also takes into account weights associated with edges in the graph. In the present application the weights are made equal to size of the corresponding queues.

IB.2 System Model

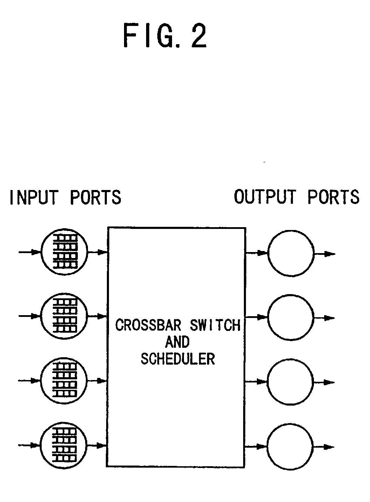

For a better understanding of the background material and the present invention, a system model is described herein. It will be apparent to a skilled artisan that the system model is used only to simplify the understanding of the material described herein and should not be construed to restrict the scope of the present invention. The present application uses a switching fabric comprising a crossbar switch that has $N$ input ports and $N$ output ports. It should be noted that the present invention also covers switches with M input ports and N output ports. This crossbar switch is capable of routing an arbitrary permutation of fixed-sized packets in one time step. Only one cell can leave an input port or reach an output at a time step. Therefore, many cells may be queued at the inputs. Using a single queue per input port leads to the head-of-line blocking effect that can severely limit throughput. For detailed information on such blocking effects, see Mark J. Karol, Michael Hluchyj, and Samuel P. Morgan. Input versus output queuing on a space-division packet switch. *IEEE Transactions on Communications,* COM-35(12):1347-1356, December 1987.
Various research groups have advocated the use of $N$ queues per input port, one queue each for each of the $N$ outputs. For example, see Thomas E. Anderson, Susan S. Owicki, James B. Saxe, and Charles P. Thacker, "High-speed switch scheduling for local-area networks", *ACM Transactions on Computer Systems)* 11(4):319-352, November 1993, M. Karol, K. Eng, and H. Obara, "Improving the performance of input-queued ATM packet-switching", in *Proceedings IEEE INFOCOM'92,* pages 110-115,1992, and Nicholas William McKeown, *"Scheduling Algorithms* for *Input-Queued Cell Switches",* PhD thesis, University of California at Berkeley, 1995. The described technique - known as *virtual output queuing* (VOQ) - is the model that is used to provide background information and to describe the preferred embodiments. Intuitively, VOQ allows the switch to have greater flexibility when selecting a permutation. See FIG. 2 for an example VOQ switch with N = 4.
$\alpha_{ij}$ represents the rate of arrival of packets that need to go from input port i to output port j. A rate of 50% implies that, on the average, a packet is sent from the input port i to output port j every other time step. The rate at which packets arrive at input port i is $R_i$, which is equal to $\Sigma_j \alpha_{ij}$. The rate at which packets arrive at output port j is Sj, which is equal to $\Sigma_i \alpha_{ij}$. Note that in the summation i represents all input ports and j represents all output ports. Informally, a switch is *stable* when no input queue grows unboundedly. A traffic is *admissible* when $\forall$ *i,j* $R_i$, $S_j$ < 100%.

IB.3 Router Switches and Scheduling

An important example of such a queuing system is a router switch used in applications like the Internet. The present application uses a switch as an important example of a queuing system that can be represented using a bipartite graph. It should be noted that the present invention should not be limited to a switch and can be applied to any queuing system that can be represented using a bipartite graph.

The growth of the Internet places continuously increasing demands on routers and switches. Switch designs capable of handling aggregate bandwidths of tens or hundreds of gigabits per second, with commensurate increase in the number of input and output ports are presently available. In a network system cells (or packets) arrive at a switch through several input ports. These cells are routed through one or more of several output ports based on a scheduling method used by the switch. It should be noted that in the present Application, packets and cells are used interchangeably and the present invention is not restricted to any particular kind of cell or packet.

Designers of high-bandwidth switches face the challenge of providing effective techniques for scheduling cells through the switching fabric. Currently, the best known approaches from a theoretical perspective make use of the conventional Maximum Weight Bipartite Matching (MWBM) method. It was shown independently by Tassiulas and Ephremides and by McKeown, Anantharam, and Walrand that MWBM is stable, under fairly general stochastic assumptions, as long as no input or output port is required to operate at 100% capacity. A scheduling method is stable when no queue (related to any input port or output port) grows in an unbounded fashion. For additional information on MWBM see Leandros Tassiulas and Anthony Ephremides, "Stability properties of constrained queuing systems and scheduling policies for maximum throughput in multihop radio networks", *IEEE Transactions on Automatic* Control, 37 (12):1936-1948, December 1992; *and* Nick McKeown, Venkat Anantharam, and Jean Walrand, "Achieving 100% throughput in an input-queued switch" ,in Proceedings *IEEE INFOCOM'96,* pages 296-302, San Francisco, CA, March 1996. A traffic pattern where no input or output ports are fully loaded is considered *admissible.*

However, the running times of the best known methods for MWBM are O($N^2 \log N + Nm$) and O($N^{1/2}m\log NC$), where N is the number of input ports in the switch, $m \leq N^2$ is the number of non-empty queues, and C is the maximum queue size. For detailed information on running times of MWBM methods (see M. L. Fiedman and R. E. Tarjan, "Fibonacci heaps and their uses in improved network optimization algorithms", *Journal* of *the ACM,* 34:596-615,1987, and H. Gabow and R. E.Tarjan, "Faster scaling algorithms for network problems", *SIAM Journal on Computing,* 18: 1013-1036,1989). Moreover, these methods are inherently sequential. Because of the running time involved per permutation, full implementations of MWBM are impractical. It is believed that full implementations of MWBM and unlikely to be possible for high-bandwidth switches that need one permutation is calculation per cell time. Permutation is equivalent to matching.

In contrast, a scheduling approach based on Maximum (Size) Bipartite Matching (MBM) has two major advantages.

- First, the best known MBM method has a running time O($N^{1/2}m$). For detailed information on running times of MBM, see I E. Hopcroft and R. M. Karp, "An $n^{5.5}$ algorithm for maximum matching in bipartite graphs", *SIAM Journal on Computing,2*:225-231,1973, E. A. Dinitz, "Algorithm for solution of a problem of maximum flow in networks with power estimation", *Soviet Math. Dokl*, 11:1277-1280, 1970, and S. Even and R. E. Tarjan, "Network flow and testing graph connectivity", *SIAM Journal on Computing,* 4:507-518,1975.
- Second, the input of the method requires only knowledge of whether each queue is empty or non-empty ($N^2$ bits); in contrast, the MWBM method requires knowledge of the length of each queue ($N^2$ integers, where the size of the integers has no upper bound).

However, the disadvantage of MBM over MWBM is the fact that MBM is not stable for all admissible traffic patterns. In particular, McKeown et al. show a simple traffic pattern with *N* = 3 that is admissible but is not stable under MBM. See Nick McKeown, Venkat Anantharaman and Jean Warland, "Achieving 100% throughput in an input-queued switch" in *Proceedings IEEE INFOCOM'96,* pp 296-302, San Francisco, CA.

It can be conjectured, however, that there is an interesting class of admissible traffic patterns for which MBM *will* be stable. This class of traffic is the *balanced* traffic pattern. For balanced traffic patterns, all input and output ports are equally loaded. The following facts justify the above conjecture:

1. It is known that MBM provides 100% utilization for an off-line version of the balanced scheduling problem. If each input port needs to send exactly T cells and is each output port needs to receive exactly T cells, it is possible to route all NT cells in exactly T permutations. See G. Birkhoff, "Tres observaciones sobre el algebra lineal", *Univ. Nac. Tuceman Rev. Ser. A5,* pages 147-150, 1946, and Shizhao Li and Nirwan Ansari, "Input-queued switching with QoS guarantees", *Proceedings IEEE INFOCOM'99,* volume 3, pages 1152-1159, March 1999. Accordingly, an MBM method can be used T times to choose the permutations.

2. To date, all known simulations of the MBM approach have been stable up to 100% load whenever the traffic flows have been balanced. Simulations have demonstrated instability only for unbalanced flows.

The permutation selection problem can be modeled in graph-theoretic terms. A *bipartite* graph, as shown in FIG. 1, is an undirected graph for which the vertices can be partitioned into two sets where each edge goes between the two sets. A bipartite graph can be used to represent the switch, where each input port is represented by a node in one set, each output port is represented by a node in the other set. The existence of an edge between two vertices indicates that a cell exists to be routed between the corresponding input and output ports in the switch. A *maximal matching* is a matching to which no edge can be added while maintaining a matching.

Most of the scheduling methods discussed in the literature fall into two categories: those that consider the sizes of the queues (exemplified by MWBM), and those that do not (exemplified by MBM).

In the MWBM approach, the edges of the bipartite graph are assigned weight values. Typically, the edge from input port i to output port j is assigned weight equal to $q_{ij}$ the number of packets queued at input port *i* with destination being output port *j*. A maximum weight matching is then computed at the resulting graph. As mentioned in earlier, the MWBM approach provides stability even when the traffic pattern is unbalanced. However, the running times of the best known methods are $O(N^2 \log N + Nm)$ and $O(N^{1/2}m \log NC)$. Moreover, these methods are inherently sequential, making a good hardware implementation problematic. Heuristics trying to approximate MWBM have also been proposed, but they also seem to be limited by bottlenecks of sequential computation. See Adisak Mekkittikul and Nick McKeown, "A practical scheduling method to achieve 100% throughput in input-queued switches", in *Proceedings IEEE INFOCOM'98,* pages 792-799, San Francisco, CA, March 1998; and Anthony C. Kam and Kai-Yeung Siu, "Linear complexity methods for bandwidth reservations and delay guarantees in input-queued switches with no speedup".

With the MBM approach, the maximum number of packets possible are routed at every time slot. Though asymptotically superior to MWBM methods - the best known MBIV1 method has running time of only $O(N^{1/2}m)$; the MBM is still a difficult method to implement under the speed constraints of a high-bandwidth switch. A number of heuristic approximations have been developed, such as PIM and SLIP, which admit simpler implementations and try to approximate a maximum size matching. See Nick McKeown, Martin Izzard, Adisak Mekkittikul, William Ellersick, and Mark Horowitz, "The Tiny Tera: A packet core switch. In *Hot Interconnects IV,* pages 161-173, Stanford University, August 1996, Nicholas William *McKeown,"Scheduling Algorithms for Input-Queued Cell Switches",* PhD thesis, University of California at Berkeley, 1995, Thomas E. Anderson, Susan S. Owicki, James B. Saxe, and Charles P. Thacker, "High-speed switch scheduling for local-area networks", *ACM Transactions on Computer Systems,* 11(4):319-352, November 1993. These heuristic approaches can also lead to instability for unbalanced but admissible traffic patterns.

IB.4 Scheduling Heuristics for MBM

A skilled artisan would know that several heuristics can be used with the MBM method. MBM-related heuristics, described herein, were used in the experiments described in Section IVD. For a comprehensive comparative study of the different MBM methods.

**PIM**. Parallel Iterative Matching (PIM) is a heuristic which converges to a maximal matching in O(log *n*) iterations on average. See Thomas E. Anderson, Susan S. Owicki, James B. Saxe, and Charles P. Thacker, "High-speed switch scheduling for local-area networks", *ACM Transactions on Computer* Systems 11(4):319-352, November 1993. At every iteration, unmatched inputs propose to every output for which they have a queued cell. If an unmatched output receives any requests, it grants to one by selecting *uniformly at random* over all requests. If an input receives more than one grant it randomly selects one among them.

**RND**. The RND heuristic is similar to PIM. The difference is that every unmatched input *i* makes only a single request to a randomly chosen output port *j* for which *i* has a queued cell.

**RR-RND**. In the round-robin method RR-RND, scheduling for a given time slot t is determined by a fixed priority schedule. The input $i_1$ with the highest priority chooses randomly among the outputs for which it has a queued cell. The input $i_2$ with the next highest priority chooses next among the not-taken outputs, and so on. At the next time slot t+1 the input-port priorities will be incremented by 1, modulo *N*. The advantage of this priority scheme is that it can be easily implemented in hardware with a pipeline mechanism.

**SLIP**. SLIP was developed by McKeown and analyzed extensively. *See* Nicholas William McKeown, *"Scheduling Algorithms for Input-Queued Cell Switches",* PhD thesis, University of California at Berkeley, 1995. Each input port and output port has a distinct priority wheel. An input sends a request to every output for which it has a queued cell. An output chooses to accept a request from port i, based on its priority wheel; if the grant is accepted by i, the priority wheel at j will be set to (i+1)mod *N*. Input ports accept grants based on priority wheels, and advance their wheels in a similar fashion.

**SHAKEUP**. The SHAKEUP technique was introduced by the present inventors in the concurrently filed U.S. Application No.342,975. SHAKEUP can be used by itself or in combination with any other method, and was demonstrated to achieve significant performance gains. See the U.S. Application No.342,975. The method assumes a bipartite graph along with some initial matching; the initial matching has perhaps been generated through some other heuristic. The basic idea is that each unmatched vertex in *A* will be allowed to force a match for itself, even if that means removing an existing match. Specifically, each unmatched vertex x in set *A* that is incident to at least one edge selects uniformly at random one of those incident edges, say (x, y). If $y \in B$ is unmatched, then (x, y) is added to the matching. If y is already matched through edge (*z*, y), *z* ∈ *A*, then (*z*, y) is removed from the matching and (x, y) is added. Finally, if more than one vertex in A attempts to match to the same vertex in *B* during a shakeup, then one of the competing vertices in *A* is selected in a random fashion as the winner. It is assumed here that Shakeup is not implemented in parallel but instead we go through the unmatched vertices in *A* in a randomly selected order. Note that SHAKEUP returns a matching that is at least as large as the initial is matching. See the U.S. Application No.342,975 for detailed experiments and theoretical justification for SHAKEUP. It should be noted that the PIM, RND and SLIP heuristics fall into the class of iterative heuristics. Iterative heuristics are not guaranteed to find a maximal matching in a single execution (iteration). Therefore repeating them more than once, may increase the size of the permutation.

As is described in the background section, both the MBM and MWBM approaches have their disadvantages. Therefore, a scheduling method that has the stability of an MWBM with the lesser running time requirements of an MBM is required, specifically for implementing High-bandwidth switches.

It is an object of the present invention to provide high performance scheduling on general traffic patterns.

It is a specific object of the present invention to provide a scheduling method for a switch, which achieves the excellent stability properties of the MWBM scheduler while running the simpler MBM or MBM-based heuristics.

The approach of the present invention is called *shooting blanks,* and its main idea is described as follows. In the shooting blanks method the traffic through lightly loaded ports is *increased* by generating dummy packets so that all inputs and outputs end up with the same arrival rate of A. After the dummy packet generation takes place, MBM or an MBM-related heuristic is applied to compute the permutation to be routed. Lightly loaded ports have incident edges corresponding to dummy traffic so the method is deceived into picking these for inclusion in the matching.

To meet the objects of the present invention, there is provided a computer-implemented queuing method for a system with M groups of N input queues each of said N input queues requesting a unique one of N services wherein M and N are natural numbers, thereby having M x N queues, said method comprising: determining arrival rates of entries for the M groups and the N services; identifying one of said M groups and N services with a highest arrival rate; adding dummy entries to all M groups and N services other than said group or service identified such that the arrival rates of entries for the M groups and N services are substantially the same; and using a scheduling method that does not consider the length of the input queues.

Another aspect of the present invention is a method of routing in a switch comprising ports, said ports being one of M input ports and N output ports having cells to route between said M input ports and N output ports, said cells arriving at a different rate for a subset of ports, each of said M input ports having N queues thereby having M x N queues, said method comprising: identifying a port with a highest arrival rate of cells, wherein an arrival rate for one of said M input ports is a sum of an arrival rate for each N queue associated with said one of M input ports and an arrival rate for one of said N output ports is a sum of arrival rates from each of said M input ports to said one of N output ports; adding dummy cells to all input ports and output ports other than said input port or output port with a highest arrival rate, such that the arrival rates for all the input ports and output ports are substantially the same; and using a scheduling method that does not consider queue lengths.

Preferably dummy cells are added using a process comprising: performing fill-up wherein dummy flows are determined for appropriate queues to ensure that arrival rates for all said ports are equal; and performing generation where dummy cells are generated at the arrival rates determined.

Preferably fill-up is performed using a process comprising: identifying a maximum arrival rate $\Lambda$ among the ports; initializing rates of packet transmission $\gamma_{ij}$ between input port i and output port j to $\alpha_{ij}$ an original transmission rate; initializing an input port pointer and an output port pointer to 1; incrementing said input pointer and said output pointer until an input port and an output port with arrival rates $R_i$ and $S_j$ less than $\Lambda$; adding dummy cells for flow between i and j at a rate $\beta_{ij} = \Lambda - R_i$ if $R_i$ is greater than or equal to $S_j$ otherwise $\beta_{ij} = \Lambda - S_j$; updating the target arrival rate $\gamma_{ij}$ to $\gamma_{ij} + \beta_{ij}$; repeating the steps until all ports are completed.

Preferably generation is performed by generating dummy cells at each input ports such that the target arrival rate is met and piggybacking a real cell onto a corresponding dummy cell when said real cell arrives at an input port and wherein each queue maintains a credit value associated with said each said queue corresponding to a number of dummy cells queued for transmission in each said queue, a scheduler being told of a cell in a specific queue when said credit value is greater than or equal to 1 and said credit value being decremented by one when said specific queue is selected.

Still preferably the dummy cells are not actually generated but each input queue maintains a number $d_{ij}$, said number being same as said credit value and corresponding to a number of dummy cells queued for transmission from i to j, said number and said credit value being incremented with a probability of $\gamma_{ij}$ at every time step.

Still preferably, whenever a connection is granted between i and j a real cell is transmitted if such real cell is queued for transmission between i and j.

In another improvement, preferably dummy cells are not generated but each input queue maintains a number $c_{ij}$, said number being same as said credit value, wherein $c_{ij}$ and said credit value are floating point numbers corresponding to a number of dummy cells queued for transmission from i to j, said number and said credit value being is

incremented with $\gamma_{ij}$ at every time step, wherein $\gamma_{ij}$ is taken as a fraction between 0 and 1.

Preferably, whenever a connection is granted between i and j a real cell is transmitted if such real cell is queued for transmission between i and j.

In an alternate improvement, preferably, whenever $c_{ij} >= 1$ or if a real cell exists in a queue between i and j, said queue informs a scheduler that a cell is ready for transmission between queues i and j.

Another aspect of the present invention is a shooting blank switch comprising:

M + N ports, said ports being one of M input ports and N output ports having cells to route between said M input ports and N output ports, said cells arriving at a different rate for a subset of ports, each of said M input ports having N queues thereby having M x N queues; a rate identifier for identifying a port with a highest arrival rate of cells, wherein an arrival rate for one of said M input ports is a sum of an arrival rate for each N queue associated with said one of M input ports and an arrival rate for one of said N output ports is a sum of arrival rates from each of said M input ports to said one of N output ports; a fill-up determiner for determining dummy flows for appropriate queues to ensure that arrival rates for all said ports are equal; and a dummy cell generator where dummy cells are generated at the arrival rates determined by said fill-up determiner; and a scheduler that does not consider queue lengths.

Preferably the generator generates dummy cells at each input ports such that the target arrival rate is met and piggybacks a real cell onto a corresponding dummy cell when said real cell arrives at an input port and wherein each queue maintains a credit value associated with said each said queue corresponding to a number of dummy cells queued for transmission in each said queue, a scheduler being told of a cell in a specific queue when said credit value is greater than or equal to 1 and said credit value being decremented by one when said specific queue is selected.

Preferably the dummy cells are not actually generated but each input queue maintains a number $d_{ij}$ corresponding to a number of dummy cells queued for transmission from i to j, said number being incremented with a probability equal to a target rate $\gamma_{ij}$ at every time step.

Still preferably whenever a connection is granted between i and j a real cell is transmitted if such real cell is queued for transmission between i and j.

In another improvement, preferably the dummy cells are not generated but each input queue maintains a number $c_{ij}$, equal to said credit value, wherein $c_{ij}$ and the corresponding credit values are floating point number corresponding to a number of dummy cells queued for transmission from i to j, said number being incremented with $\gamma_{ij}$ at every time step, wherein $\gamma_{ij}$ is taken as a fraction between 0 and 1.

Still preferably whenever a connection is granted between i and j a real cell is transmitted if such real cell is queued for transmission between i and j.

In an alternate improvement, still preferably, wherein whenever $c_{ij} >= 1$ or if a real cell exists in a queue between i and j, said queue informs a scheduler that a cell is ready for transmission between queues i and j.

Yet another aspect of the present invention is a networking system comprising switches wherein a subset of switches are shooting blank switches.

The above objectives and advantages of the present invention will become more apparent by describing in detail preferred embodiments thereof with reference to the attached drawings in which:

FIG. 1 shows a bipartite graph abstraction of a scheduling problem;
FIG. 2 shows a crossbar switch that supports VOQ, N =4;
FIG. 3 shows an example of unbalanced flows;
FIG. 4 shows new rates of traffic in FIG.3 after the generation of dummy flows by the Fill-up component;
FIG. 5 shows a counter-based implementation of the generation component;
FIG. 6 shows a preferred embodiment of a shooting blanks switch; and
FIG. 7 shows a preferred embodiment of a network system using a shooting blanks switch.

### IVA. Shooting Blanks Approach

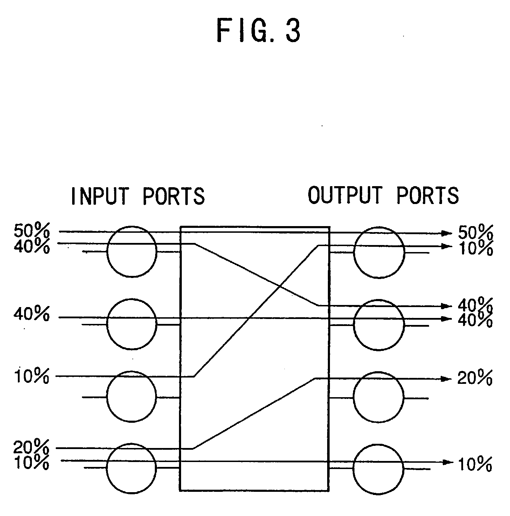

The preferred embodiment uses a switch for serving a set of flows that define at the heaviest loaded port (either input or output) an arrival rate equal to $\Lambda$. In such a case, a packet arrives on an aver-age based on $\Lambda$. FIG. 3 shows an embodiment of such a switch. Note that in FIG. 3, the heaviest loaded port is the topmost input port. In the shooting blanks method, the traffic through lightly loaded ports is *increased* by generating dummy packets so that all inputs and outputs end up with the same arrival rate $\Lambda$. After the dummy packet generation takes place, MBM or an MBM-related heuristic is applied to compute the permutation to be routed. Lightly loaded ports have many incident edges corresponding to dummy traffic so the method is deceived into picking these dummy packets for inclusion in the matching.

The shooting blanks method has three main advantages: (i) It is shown experimentally to match the excellent stability properties of MWBM while using MBM-related methods (cf. Section IVD). (ii) The overhead from implementing the shooting blanks idea on top of MBM heuristics is small (cf. Section IVA) and certainly negligible compared to the complexity of MWBM or even MBM. (iii) The approach is modular; it focuses on "preprocessing" the traffic and can be combined with any scheduling method.

### IVB Implementation of the Shooting Blanks

The implementation details of a preferred embodiment is described herein. The switch of the preferred embodiment operates in a Quality of Service (QoS) environment where flows have contracts determining the bandwidth they are entitled to. The bandwidth is expressed as a rate and the rate $\alpha_{ij}$ of an *i-j* link, that is a link between an input port i and an output port j, is the sum of the rates reserved for all customers on the link. The rates agreed upon in the contracts are known to the Call Admission Controller (CAC). The network system ensures that no flow exceeds its assigned rate. The rates change infrequently enough so they can be assumed to be fixed over a large time window.

The shooting blanks method of the present invention has three distinct components.

(i) the *Fill-Up* component where the dummy flows are determined for appropriate input/output pairs to ensure that the rates $R_i$, $S_j$, for all input ports and output ports are equal.
(ii) the *Generation* component, which is responsible for generating the dummy packets at the rates determined by the Fill-Up component.
(iii) the actual scheduling component in which any method of choice, preferably MBM or an MBM-related heuristic, can be run to compute a permutation.

IVB.1 The Fill-Up Component

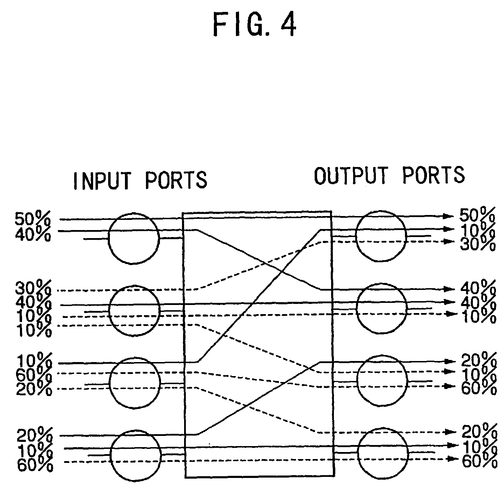

This component is implemented using a greedy procedure. An example of the effect of the Fill-Up for the traffic depicted in FIG. 3 is shown in FIG. 4. Let $\Lambda$ denote the maximum among the input and output rates. The component is going to output new rates $\gamma_{ij}$, which are initialized to $\alpha_{ij}$, the original rate values. The greedy procedure goes through the input and output ports in the order 1 to *N*. Two pointers are maintained, one to the current input *i* and one the current output *j*. The pointers are incremented until an input port and an output port with load less than $\Lambda$ is found. For both *i* and *j*, $R_i$, $S_j < \Lambda$. Without loss of generality assume that $\Lambda - R_i < \Lambda - S_i$. Add a flow from i to j with rate $\beta_{ij}=\Lambda-R_i$ and update the rate $\gamma_{ij}$ to $\gamma_{ij} + \beta_{ij}$. Move the input pointer to the next $i' > i$, such that $R_{i'} < \Lambda$. Repeat this step. The description of the Fill-Up component is now complete.

Observe that the Fill-Up component adds at most 2N - 1 extra flows. At every step, it is always possible to add an edge so that progress is made towards the goal of achieving uniform load $\Lambda$. This is due to the fact that the sum of the input rates is always equal to the sum of the output rates. Therefore the method is correct.

IVB.2 The Generation Component

The implementation of the generation component is described herein. The most heavily loaded port has a rate of $\Lambda$. This component must generate the dummy flows at the rate determined by the Fill-Up component. An additional complication is that when a real flow, say out of a given input *i*, fails below the rate agreed in its contract, the method must increase the rate at which dummy packets are generated to meet the $\Lambda$ rate established for *i* by the Fill-Up component.

To deal efficiently with the above two requirements for the component, a 'piggybacking" technique is used. Input *i* generates dummy packets towards the destinations of the real and dummy flows determined by the Fill-Up component at a total rate of exactly $\Lambda$. All the scheduler sees for connection *i-j* is a 1 or 0 corresponding to the existence or not of dummy packets. When a real packet is queued at input i with destination j, it is transferred on top of a dummy packet the next time the scheduler allows an *i-j* connection. The piggybacking technique allows the implementation of shooting blanks without additional expensive policing of the real flows and while using fixed rates for dummy packet generation along any given link, a method easily implementable in hardware.

To improve efficiency further, in a still preferred embodiment the dummy packets are not generated explicitly and maintained. For every pair *(i,j)* of input-output ports only the number $d_{ij}$ of dummy packets queued for transmission from i to j is maintained. This number is incremented with probability $\gamma_{ij}$ at every time step. If $d_{ij} > 0$, the scheduler sees a 1, i.e. an *i-j* edges exists in the bipartite graph, and 0 otherwise. Whenever the scheduler grants an *i-j* connection (which implies $d_{ij} > 0$) and $q_{ij} > 0$, (which implies there is a real packet queued for transmission), a real packet is routed and $d_{ij}$ is decremented by one. If the *i-j* connection is granted and no real packet is queued, $d_{ij}$, is simply decremented by one.

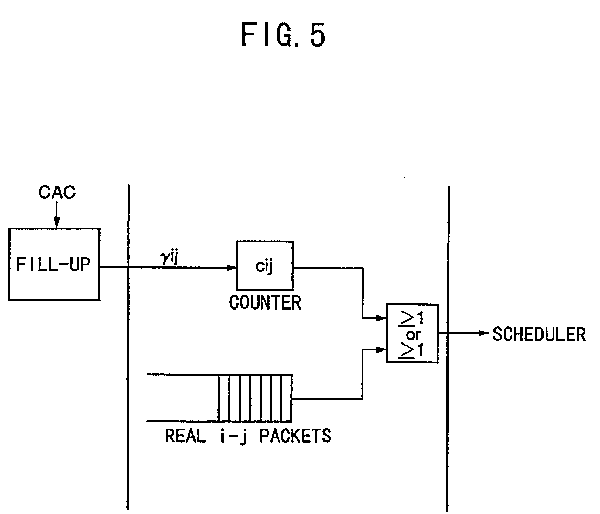

In a further preferred embodiment a deterministic approach as opposed to a probabilistic approach is used. This approach avoids the use of a random number generator that is too costly. Let $\gamma_{ij}$ be the rate determined by the Fill-Up component for the *i-j* connection. A counter $c_{ij}$ is, maintained and incremented at every time step by $\gamma_{ij}$ (taken as a fraction between 0 and 1.) The value of the counter is a floating point number that can is take negative values as well. As before, the integer $q_{ij}$ maintains the number of real packets. The scheduler sees an *i-j* edge in the bipartite graph if $q_{ij} > 0$ or $c_{ij} \geq 1$. If the scheduler grants an *i-]* connection, $c_{ij}$ is decremented by one and a real packet is routed if one is present (i.e. $q_{ij} > 0$). FIG.5 shows a schematic depiction.

### IVC. Shooting Blanks Switch

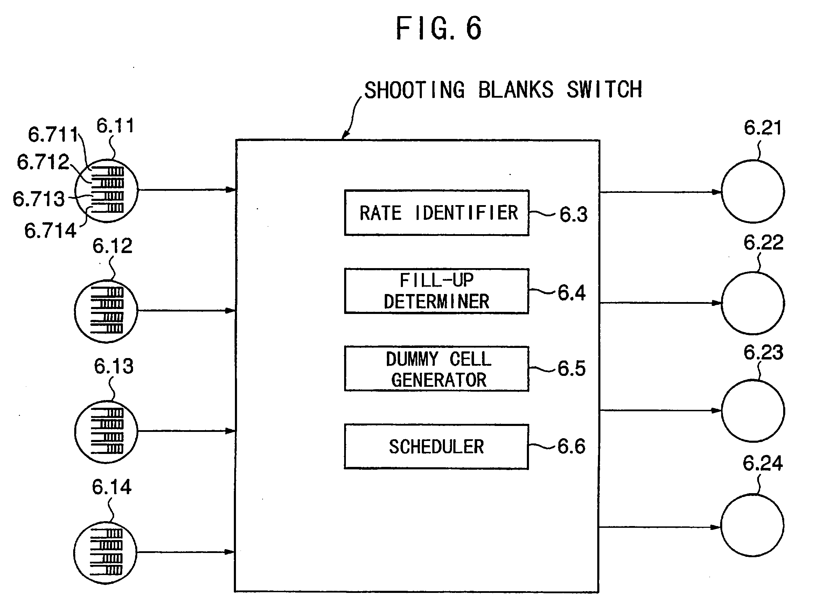

A preferred embodiment of a shooting blanks switch is shown in FIG.6. The shooting blanks switch comprises ports. The ports comprise M input ports 6.11-6.14 and N output ports 6.21-6.24. In the switch described M=4 and N=4. Cells arrive at the input ports and have to be routed between the M input ports and N output ports. These cells arrive at different rates. Each cell is queued in one of several queues (6.711-6.714 are some of the queues). One queue corresponds to cells that are to be routed from a specific input port to a specific output port. For example, the queue 6.714 queues cells that are to be routed from input port 6.11 to output port 6.24. Similarly the queue 6.712 queues cells that are to be routed from input port 6.11 to output port 6.22. Therefore, each input port has N queues, corresponding to cells that are to be routed from that input port to each of N output ports. Thus, there are M x N queues in this switch. In this case there are 4 x 4 = 16 queues. A rate identifier 6.3 identifies a port with a highest arrival rate. An arrival rate for an input port is a sum of an arrival rate for all N queues associated with that input port. Similarly an arrival to rate for an output port is a sum of arrival rates from each of the M input ports to that output port. A fill-up determiner 6.4 determines dummy flows for appropriate queues to ensure that arrival rates for all the ports are equal. A dummy cell generator 6.5 generates dummy cells at the arrival rates determined by the fill-up determiner. A scheduler 6.6 performs routing based on a heuristic MBM method that does not consider queue lengths.

### IVD. Network System using a Shooting Blanks Switches

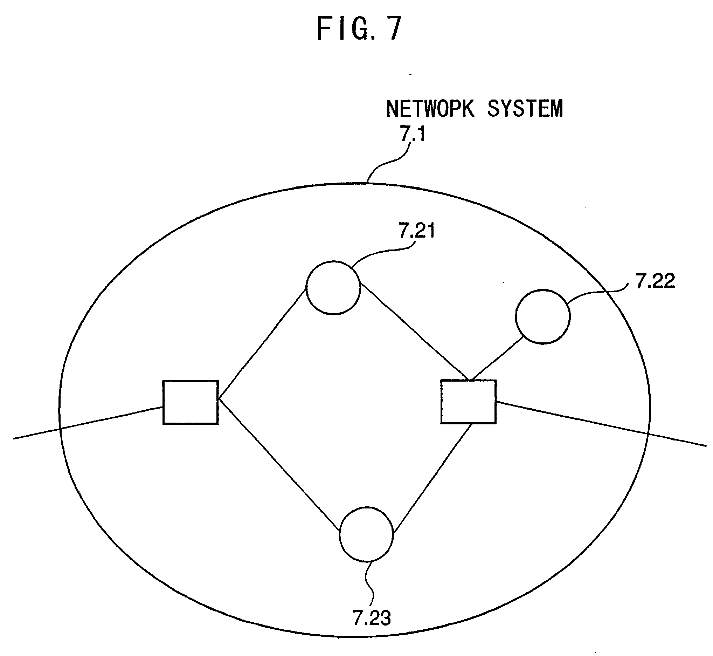

A preferred embodiment of a network system using shooting blanks switches is shown in FIG. 7. The network system 7.1 has several switches. A subset of these switches comprise shooting blanks switches 7.21-7.23. The structure of a preferred embodiment of the shooting blanks switch is described in the previous section.

### IVD. Experimental Results

It should be noted that the experiments described herein are merely illustrative and should not be construed to restrict the scope of the invention. These simulation experiments are used to show that the shooting blanks techniques yield superior results compared to conventional scheduling approaches that do not use the shooting blanks technique. It should be emphasized that although the shooting blanks methods can be combined orthogonally with any scheduling heuristic, it will perform better with good methods which come close to approximating maximum size matching on balanced inputs. The experiments described use example traffic pattern that is generated in the following manner. At any time step, each input port i generates a cell with probability $\Sigma_{j=1}^{N}\alpha_{ij}$. The destination of a cell generated at input port is output port j with probability $\alpha_{ij}/\Sigma_{j=1}^{N}\alpha_{ij}$.

A degree of an input port is the number of output ports to which it is matched. Likewise, a degree of an output port is the number of input ports to which it is matched. *Low-degree* and *unbalanced* traffic patterns, as described in the U.S. Application No.342,975 is considered as an example traffic type. This traffic type is a generalization of a traffic pattern described by McKeown et al. The traffic pattern described in McKeown is admissible, but causes the queues to grow unboundedly if MBM is the scheduling method. See Nick McKeown, Venkat Anantharam, and Jean Walrand, "Achieving 100% throughput in an input-queued switch", in *Proceedings IEEE INFOCOM'96,* pages 296-302, San Francisco, CA, March 1996. For the present simulations, half of the input ports and half the output ports support exactly 1 flow; the other input and output ports support exactly two flows. Each flow generates traffic at the same rate, so half the ports are loaded at rate $\lambda$ while the other half are loaded at $2\lambda$. To create the flows at the start of the simulation, 2 random permutations are used, selecting each of the *N!* possibilities with equal probability. For the heavily loaded input ports, both flows defined by the permutations are used. For the lightly loaded input ports, only the first permutation is used to define the flows.

Switches of size *N* = 4 and *N* = 8 are considered. The actual rate matrices used is shown for completeness. Element *i,j* represents the rate from input port i to output port j. The rate matrix for the real traffic is labeled $\alpha_N$; the rate matrix for blanks is labeled $\beta_N$; the overall rate matrix is labeled $\gamma_N = \alpha_N + \beta_N$. Note that $\alpha_N$ is generated as described in the preceding paragraph, while $\beta_N$ is calculated from $\alpha_N$ as described in Section IVB.1.

For size N = 4 have $\gamma_4 = \alpha_4 + \beta_4$,

$$\begin{bmatrix} 0 & \lambda & \lambda & 0 \\ 0 & \lambda & 0 & \lambda \\ \lambda & 0 & \lambda & 0 \\ \lambda & 0 & 0 & \lambda \end{bmatrix} = \begin{bmatrix} 0 & 0 & \lambda & 0 \\ 0 & \lambda & 0 & 0 \\ \lambda & 0 & \lambda & 0 \\ \lambda & 0 & 0 & \lambda \end{bmatrix} + \begin{bmatrix} 0 & \lambda & 0 & 0 \\ 0 & 0 & 0 & \lambda \\ 0 & 0 & 0 & 0 \\ 0 & 0 & 0 & 0 \end{bmatrix}$$

For size $N = 8$ have $\gamma_8 = \alpha_8 + \beta_8$,

$$\begin{bmatrix} 0 & \lambda & 0 & 0 & 0 & 0 & \lambda & 0 \\ \lambda & 0 & \lambda & 0 & 0 & 0 & 0 & 0 \\ 0 & 0 & \lambda & \lambda & 0 & 0 & 0 & 0 \\ 0 & 0 & 0 & \lambda & \lambda & 0 & 0 & 0 \\ 0 & 0 & 0 & 0 & \lambda & 0 & \lambda & 0 \\ 0 & \lambda & 0 & 0 & 0 & 0 & 0 & \lambda \\ \lambda & 0 & 0 & 0 & 0 & \lambda & 0 & 0 \\ 0 & 0 & 0 & 0 & 0 & \lambda & 0 & \lambda \end{bmatrix} = \begin{bmatrix} 0 & 0 & 0 & 0 & 0 & 0 & \lambda & 0 \\ \lambda & 0 & 0 & 0 & 0 & 0 & 0 & 0 \\ 0 & 0 & \lambda & 0 & 0 & 0 & 0 & 0 \\ 0 & 0 & 0 & \lambda & 0 & 0 & 0 & 0 \\ 0 & 0 & 0 & 0 & \lambda & 0 & \lambda & 0 \\ 0 & \lambda & 0 & 0 & 0 & 0 & 0 & \lambda \\ \lambda & 0 & 0 & 0 & 0 & \lambda & 0 & 0 \\ 0 & 0 & 0 & 0 & 0 & \lambda & 0 & \lambda \end{bmatrix} + \begin{bmatrix} 0 & \lambda & 0 & 0 & 0 & 0 & 0 & 0 \\ 0 & 0 & \lambda & 0 & 0 & 0 & 0 & 0 \\ 0 & 0 & 0 & \lambda & 0 & 0 & 0 & 0 \\ 0 & 0 & 0 & 0 & \lambda & 0 & 0 & 0 \\ 0 & 0 & 0 & 0 & 0 & 0 & 0 & 0 \\ 0 & 0 & 0 & 0 & 0 & 0 & 0 & 0 \\ 0 & 0 & 0 & 0 & 0 & 0 & 0 & 0 \\ 0 & 0 & 0 & 0 & 0 & 0 & 0 & 0 \end{bmatrix}$$

The range $0 \leq \lambda \leq 1/2$ is considered. Since the maximum load on any port is $2\lambda$, we call $2\lambda$ the *rate* of the simulation.

The experiments attempt to empirically evaluate the maximum rate of *stability* for a particular configuration, where a configuration consists of a switch size, a scheduling method, and a traffic pattern. Informally, the configuration is stable if the input queues do not grow unboundedly. The empirical definition of stability is as follows: if the sum of the input queue sizes does not grow to more than some fixed upper limit, Q, in some fixed number of time steps, $T$, the configuration is declared stable. It should be noted that increasing Q or decreasing $T$ can have the effect of increasing the range of experimental stability for some configurations. Also, increasing either Q or T can increase the simulation time. For our experiments. we use $Q = 16N^2$ cells and $T = 256N^2$. The stability experiments determine the maximum rate the configuration can be run at before our stability criterion is violated. Since these stability experiments can be very lengthy, a drop-out condition is added. The sum of the queue sizes is checked every 1,000 time steps; if this sum has not grown since the last check, the system is assumed to be stable.

Table 1 contains the experimental results. For nine scheduling methods, rates of stability are tested for 4 ports without blanks, 4 ports with blanks, 8 ports without blanks, 8 ports with blanks. The scheduling methods are grouped into three classes: MBM, high-quality MBM heuristics, and low-quality MBM heuristics. The quality of a heuristic refers to how well it approximates MBM behavior on the original traffic before adding the blanks. Heuristics with stability rate below $\Lambda$ are characterized as low-quality for the purposes of this discussion. All iterative methods were run for 4 iterations.

The main result is shown in the first line of the table. For $N = 4$, MBM is stable up to $\Lambda$ without blanks and up to 100% with blanks. For $N = 8$, the use of blanks raises the stability rate from 93% to 100%.

The next class of scheduling methods - which includes PIM-SHAKE-4, RND-SHAKE-4, RR-RND-SHAKE-4, and SLIP-SHAKE-4 - are considered high-quality heuristics. For this class of heuristics, a general improvement is seen through the use of blanks. Typical improvements are from 93% stability to 98% stability with 4 ports, and 90% stability to 92% stability with 8 ports. Note that the fact that these methods perform better than MBM for $N = 4$ without blanks can be explained for this example, but will not hold in general. These heuristics are biased towards nodes in the bipartite graph with more incident edges. This is helpful for these examples, for nodes with two edges need to support twice as much bandwidth.

Table 1

| Scheduling algorithm | 4 ports | | 8 ports | |
|---|---|---|---|---|
| | stable rate | stable rate w/blanks | stable rate | stable rate w/blanks |
| MBM | 90% | 100% | 93% | 100% |
| PIM-SHAKE-4 | 93% | 98% | 90% | 92% |
| RND-SHAKE-4 | 92% | 98% | 90% | 92% |
| RR-RND-SHAKE-4 | 93% | 98% | 89% | 92% |
| SLIP-SHAKE-4 | 93% | 100% | 93% | 100% |
| PIM-4 | 88% | 86% | 87% | 86% |
| RND-4 | 88% | 86% | 87% | 86% |
| RR-RND | 88% | 86% | 88% | 85% |
| SLIP-4 | 100% | 80% | 100% | 86% |

The final class of scheduling methods are relatively low-quality MBM heuristics. This class includes PIM-4, RND-4, RR-RND, and SLIP-4. In general, these methods perform slightly worse when blanks are used, reducing stability rates from 88% to 86% for both switch sizes. SLIP-4 is an exception. It achieves 100% stability without blanks, and performs much worse with blanks. The 100% throughput for SLIP-4 can be predicted given our example traffic flows. The priority wheels become perfectly synchronized allowing 100% throughput. However, SLIP-4 has trouble with the balanced traffic in this example. In general, it can be shown that SLIP has difficulty achieving high-quality solutions for many low-degree traffic patterns. See the U.S. Application No.342,975. The good performance of SLIP without blanks in the experiments is an artifact of the simple traffic pattern.

Other modifications and variations to the invention will be apparent to those skilled in the art from the foregoing disclosure and teachings. Thus, while only certain embodiments of the invention have been specifically described herein, it will be apparent that numerous modifications may be made thereto without departing from the spirit and scope of the invention.

**Claims**

1. A computer-implemented queuing method for a system with M groups of N input queues each of said N input queues requesting a unique one of N services wherein M and N are natural numbers, thereby having M x N queues, characterized by the steps of:

   a) determining arrival rates of entries for the M groups and the N services;
   b) identifying one of said M groups and N services with a highest arrival rate;
   c) adding dummy entries to all M groups and N services other than said group or service identified in step (b) such that the arrival rates of entries for the M groups and N services are substantially the same; and
   d) using a scheduling method that does not consider the length of the input queues.

2. A method of routing in a switch comprising ports, said ports being one of M input ports and N output ports having cells to route between said M input ports and N output ports, said cells arriving at a different rate for a subset of ports, each of said M input port having N queues thereby having M x N queues, characterized by the steps of:

   a) identifying a port with a highest arrival rate of cells, wherein an arrival rate for one of said M input ports is a sum of an arrival rate for each N queue associated with said one of M input ports and an arrival rate for one of said N output ports is a sum of arrival rates from each of said M input ports to said one of N output ports;
   b) adding dummy cells to all input ports and output ports other than said input port or output port with a highest arrival rate, such that the arrival rates for all the input ports and output ports are substantially the same; and
   c) using a scheduling method that does not consider queue lengths.

3. The method of claim 2 wherein step (b) further comprises:

   i) performing fill-up wherein dummy flows are determined for appropriate queues to ensure that arrival rates for all said ports are equal; and

ii) performing generation where dummy cells are generated at the arrival rates determined S in step (i).

4. The method of claim 3 wherein said fill-up further comprises:

    (A) identifying a maximum arrival rate A among the ports;
    (B) initializing rates of packet transmission $\gamma_{ij}$ between input port i and output port j to $\alpha_{ij}$ an original transmission rate;
    (C) initializing an input port pointer and an output port pointer to 1;
    (D) incrementing said input pointer and said output pointer until an input port and an output port with arrival rates $R_i$ and $S_j$ less than $\Lambda$;
    (E) adding dummy cells for flow between i and j at a rate $\beta_{ij} = \Lambda - R_i$ if $R_i$ is greater than or equal to $S_j$ otherwise $\beta_{ij} = \Lambda - S_j$;
    (F) updating the target arrival rate $\gamma_{ij}$ to $\gamma_{ij} + \beta_{ij}$; and
    (G) repeating steps (D)-(F) until all ports are completed.

5. The method of claim 3 wherein said generation is performed by generating dummy cells at each input ports such that the target arrival rate is met and piggybacking a real cell onto a corresponding dummy cell when said real cell arrives at an input port, and wherein each queue maintains a credit value associated with said each queue corresponding to a number of dummy cells queued for transmission in each said queue, a scheduler being told of a cell in a specific queue when said credit value is greater than or equal to 1 and said credit value being decremented by one when said specific queue is selected.

6. The method of claim 5, wherein dummy cells are not actually generated but each input queue maintains a number $d_{ij}$ said number being same as said credit value and corresponding to a number of dummy cells queued for transmission from i to j, said number and said credit value being incremented with a probability of $\gamma_{ij}$ at every time step.

7. The method of claim 6, wherein when a connection is granted between i and j a real cell is transmitted if such real cell is queued for transmission between i and j and $d_{ij}$ decremented by 1.

8. The method of claim 5, wherein dummy cells are not generated but each input queue maintains a number $c_{ij}$, said number being same as said credit value, wherein $c_{ij}$ and the corresponding credit value are floating point numbers corresponding to a number of dummy cells queued for transmission from i to j, said number and said credit value being incremented with $\gamma_{ij}$ at every time step, wherein $\gamma_{ij}$ is taken as a fraction between 0 and 1.

9. The method of claim 8 wherein whenever a connection is granted between i and j a real cell is transmitted if such real cell is queued for transmission between i and j.

10. The method of claim 8 wherein whenever $c_{ij} >= 1$ or a real cell exists in a queue between i and j said queue informs the scheduler that a cell is ready for transmission between queues i and j.

11. A shooting blank switch comprising:

    M + N ports, said ports being one of M input ports and N output ports having cells to route between said M input ports and N output ports, said cells arriving at a different rate for a subset of ports, each of said M input port having N queues thereby having M x N queues;
    a rate identifier for identifying a port with a highest arrival rate of cells, wherein an arrival rate for one of said M input ports is a sum of an arrival rate for each N queue associated with said one of M input ports and an arrival rate for one of said N output ports is a sum of arrival rates from each of said M input ports to said one of N output ports;
    a fill-up determiner for determining dummy flows for appropriate queues to ensure that arrival rates for all said ports are equal;
    a dummy cell generator where dummy cells are generated at the arrival rates determined by said fill-up determiner; and
    a scheduler that does not consider queue lengths.

12. The switch of claim 11 wherein said generator generates dummy cells at each input ports such that the target arrival rate is met and piggybacks a real cell onto a corresponding dummy cell when said real cell arrives at an input port and wherein each queue maintains a credit value associated with said each queue corresponding to a number of dummy cells queued for transmission in each said queue, the scheduler being told of a cell in a specific queue when said credit value is greater than or equal to 1 and said credit value being decremented by one when said specific queue is selected.

**13.** The switch of claim 11 wherein dummy cells are not actually generated but each input queue maintains a number $d_{ij}$ equal to said credit value corresponding to a number of dummy cells queued for transmission from i to j, said number being incremented with a probability equal to a target rate $\gamma_{ij}$ at every time step.

**14.** The switch of claim 13 wherein whenever a connection is granted between i and j a real cell is transmitted if such real cell is queued for transmission between i and j.

**15.** The switch of claim 12 wherein dummy cells are not generated but each input queue maintains a number $c_{ij}$, equal to said credit value, wherein $c_{ij}$ and the corresponding credit values are floating point numbers corresponding to a number of dummy cells queued for transmission from i to j, said number being incremented with $\gamma_{ij}$ at every time step, wherein $\gamma_{ij}$ is taken as a fraction between 0 and 1.

**16.** The switch of claim 15 wherein whenever a connection is granted between i and j a real cell is transmitted if such real cell is queued for transmission between i and j.

**17.** The switch of claim 16 wherein whenever $c_{ij} >= 1$ or if a real cell exists in a queue between i and j, said queue informs the scheduler that a cell is ready for transmission between queues i and j and $c_{ij}$ is decremented by 1.

**18.** A networking system comprising switches wherein a subset of switches are shooting blank switches.

# FIG. 1

## BIPARTITE GRAPH

# FIG. 2

INPUT PORTS

OUTPUT PORTS

CROSSBAR SWITCH
AND
SCHEDULER

# FIG. 3

INPUT PORTS     OUTPUT PORTS

50%
40%

40%

10%

20%
10%

50%
10%

40%
40%

20%

10%

# FIG. 4

INPUT PORTS          OUTPUT PORTS

50%                                    50%
50%                                    10%
40%                                    30%

30%                                    40%
40%                                    40%
10%                                    10%
10%

10%                                    20%
60%                                    10%
20%                                    60%

20%                                    20%
10%                                    10%
60%                                    60%

# FIG. 5

# FIG. 6

SHOOTING BLANKS SWITCH

RATE IDENTIFIER ~6.3

FILL-UP DETERMINER ~6.4

DUMMY CELL GENERATOR ~6.5

SCHEDULER ~6.6

6.711
6.712
6.713
6.714

6.11
6.12
6.13
6.14

6.21
6.22
6.23
6.24

EP 1 065 845 A2

FIG. 7